(19) Europäisches Patentamt
European Patent Office
Office européen des brevets

(11) **EP 3 415 232 A1**

(12) **DEMANDE DE BREVET EUROPEEN**

(43) Date de publication:
**19.12.2018 Bulletin 2018/51**

(21) Numéro de dépôt: **18305703.3**

(22) Date de dépôt: **11.06.2018**

(51) Int Cl.:
*B01J 20/30* (2006.01)     *B01J 20/06* (2006.01)
*B01J 20/28* (2006.01)     *B01D 53/04* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **13.06.2017 FR 1755302**

(71) Demandeurs:
- **IFP Energies nouvelles**
  **92852 Rueil-Malmaison Cedex (FR)**
- **AXENS**
  **92508 Rueil-Malmaison Cedex (FR)**

(72) Inventeurs:
- **BAZER-BACHI, Delphine**
  **30340 SAINT PRIVAT DES VIEUX (FR)**

- **CHICHE, David**
  **69007 LYON (FR)**
- **LOPEZ, Joseph**
  **30340 SAINT JULIEN LES ROSIERS (FR)**
- **SERRES, Thomas**
  **30980 LANGLADE (FR)**
- **FRISING, Tom**
  **92000 NANTERRE (FR)**
- **DUCREUX, Olivier**
  **78430 LOUVECIENNES (FR)**
- **EUZEN, Patrick**
  **75001 PARIS (FR)**

(74) Mandataire: **IFP Energies nouvelles**
**Rond-point de l'échangeur de Solaize**
**BP3**
**69230 Solaize (FR)**

(54) **PROCEDE DE PREPARATION DE SOLIDES A PARTIR D'UN MELANGE D'AU MOINS UNE POUDRE DE MALACHITE ET UNE POUDRE D'OXYDE ET UTILISATION DE CES SOLIDES**

(57) L'invention concerne un procédé de préparation d'un solide comprenant le mélange d'un ensemble comprenant au moins une poudre de $Cu_2(OH)_2CO_3$, une poudre d'un oxyde d'un métal choisi dans le groupe constitué par le cuivre, le zinc, le fer, le manganèse et leur mélange, et au moins un liant ainsi que l'utilisation du solide préparé par ce procédé.

**Description**

**DOMAINE DE L'INVENTION**

L'invention porte sur un procédé de préparation de solides à base de composés du cuivre, ainsi que sur l'utilisation de ces solides pour, entre autre, l'élimination de composés soufrés de charges gazeuses ou liquides tels que des gaz naturels, des biogaz, des gaz de synthèse, des gaz contenant du dioxyde de carbone $CO_2$, ou des hydrocarbures liquides.

Les solides préparés selon l'invention peuvent également être utilisés pour l'élimination du monoxyde de carbone CO, de composés contenant du mercure, ou de composés contenant de l'arsenic dans des charges gaz ou liquide, ainsi que pour la catalyse de la réaction de Dussan (réaction de gaz à l'eau ou « water gas shift » selon la terminologie anglo-saxonne).

**ART ANTERIEUR**

Les composés du cuivre sont connus de l'état de l'art pour leur aptitude à réagir avec les composés soufrés. La mise en oeuvre d'hydroxycarbonate de cuivre comme phase active présente un intérêt notamment car la réaction avec l'$H_2S$ semble être particulièrement rapide.

De nombreux documents abordent la désulfuration en présence d'oxyde de cuivre.

US 7837964 décrit un matériau pour la désulfuration pouvant comprendre jusqu'à 99,8% poids d'oxyde de cuivre. Le matériau est préparé par précipitation.

US 4582819 décrit un procédé de désulfuration d'hydrocarbures liquides à l'aide de solides préparés à partir d'hydroxycarbonate de cuivre et d'alumine. Les précurseurs ne sont pas peptisés. Le solide subit un traitement thermique, qui dégrade partiellement l'hydroxycarbonate de cuivre afin d'obtenir le CuO, à une température supérieure à 260°C.

US 2013/047850 décrit un procédé de purification de gaz de synthèse ($H_2$, CO) à l'aide de solides à base de CuO, élaborés selon un procédé permettant d'empêcher ou atténuer la réduction du CuO lors de la mise en oeuvre industrielle sur gaz de synthèse. Pour ce faire, les solides sont préparés à partir d'hydroxycarbonate de cuivre et d'un additif halogéné, par exemple NaCl, et d'une étape de calcination à une température comprise entre 280 et 500°C afin de décomposer entièrement le carbonate de cuivre en CuO.

Les documents US 6007706 et EP 243052 décrivent l'élimination de composés soufrés par la mise en oeuvre d'un solide comprenant au moins 70% poids d'un composé de cuivre (carbonate ou oxydes ou autre).

Cependant, aucun de ces documents n'aborde la problématique de la résistance mécanique des matériaux préparés.

Le document FR 2940967 décrit la préparation d'un solide à base de ZnO et son utilisation pour la désulfuration de charges liquides ou gazeuses, ledit solide présentant une excellente résistance mécanique et une capacité de stockage accrue. Le procédé de préparation comprend les étapes de mélange de poudres de ZnO, de peptisation et de calcination. Selon ce document, la peptisation basique du ZnO permet une dissolution partielle du ZnO en milieu basique, ce qui entraîne une diminution de la taille des particules, une densification du solide via une meilleur dispersion, et donc une augmentation de la résistance mécanique.

Cependant la malachite, qui a pour composition $Cu_2(OH)_2CO_3$, est un composé basique qui est soluble non dans un milieu basique, mais en milieu acide. La peptisation basique n'a donc pas d'effet de solubilisation qui pourrait aboutir à une diminution des tailles de particules et, in fine, à une amélioration de la résistance mécanique telle que décrite dans FR 2940967.

Le document WO 95/24962 décrit des masses de captation contenant au moins 75% poids de carbonate, hydroxycarbonate, ou hydroxyde de cuivre. L'objectif du texte est d'obtenir des solides présentant une densité de chargement d'au moins 0,9 kg/L, voire 1,2 kg/L, afin d'améliorer la capacité de captation volumique des solides (c'est-à-dire la quantité de soufre captée rapportée au volume de solide, non pas à sa masse). Ce document indique qu'il ne faut pas que la température de séchage/calcination excède 150°C, voire 115°C, afin de ne pas décomposer les composés du cuivre mis en oeuvre. Ceci permet en effet de compter le $CO_2$ et/ou l'eau contenu dans les solides sous forme de carbonate et d'hydroxyde, qui contribuent ainsi à l'augmentation de densité. Au-delà de 150°C, la décomposition du carbonate, hydroxycarbonate, ou hydroxyde de cuivre aboutit à une baisse de la densité de chargement des solides. De plus, ce document ne décrit pas d'étape de peptisation.

Cependant, les solides préparés uniquement à partir d'hydroxycarbonate de cuivre ont des propriétés de résistance mécanique particulièrement faibles, même après traitement thermique, ce qui rend leur mise en oeuvre délicate, avec en particulier des problèmes d'attrition et de production de fines.

Le procédé selon l'invention permet d'obtenir des solides qui présentent à la fois des propriétés de résistance mécanique accrues et des capacités de captation de soufre effectives supérieures à celles des solides de l'art antérieur.

**DESCRIPTION SOMMAIRE DE L'INVENTION**

L'invention concerne un procédé de préparation d'un solide comprenant les étapes de :

a) mélange d'un ensemble comprenant au moins une poudre de $Cu_2(OH)_2CO_3$, une poudre d'un oxyde d'un métal choisi dans le groupe constitué par le cuivre, le zinc, le fer, le manganèse et leur mélange, et au moins un liant ;

b) mise en contact du mélange de l'étape a) avec une solution aqueuse et malaxage de la pâte obtenue ;

c) extrusion de la pâte malaxée dans l'étape b) à une pression comprise entre 3 et 25 MPa ;

d) calcination des extrudés à une température comprise entre 140°C et 500°C et une durée comprise entre 10 min et 6 heures, sous un flux gazeux comprenant de l'oxygène.

Les adsorbants obtenus possèdent, outre une très bonne résistance mécanique, une densité et une porosité optimisées, permettant de maximiser leur capacité massique utile tout en réduisant le front de dispersion lors de la captation de soufre.

**DESCRIPTION DETAILLEE DE L'INVENTION**

Dans la suite de l'exposé, on entend par solide préparé selon l'invention aussi bien, et de manière non limitative, adsorbant, que catalyseur, ou masse de captation en fonction des usages dudit solide.

Dans la suite de l'exposé, on utilise indifféremment les termes malachite, hydroxycarbonate de cuivre, et $Cu_2(OH)_2CO_3$.

Par perte au feu du solide, notée PAF, on entend la perte de poids en %poids d'un échantillon de solide soumis à calcination à 550°C pendant 2 h.

Par poudre, on entend un ensemble de particules.

Dans l'exposé qui suit, la distribution de taille d'une poudre ou de particules est mesurée par granulométrie à diffraction laser, basée sur la théorie de la diffraction de Mie (G. B. J. de Boer, C. de Weerd, D. Thoenes, H. W. J. Goossens, Part. Charact. 4 (1987) 14-19). La distribution de la granulométrie de ladite poudre ou desdites particules est représentée par le diamètre médian, noté $D_{50}$, défini comme étant le diamètre de la sphère équivalente tel que 50% en volume desdites particules ou des particules constituant ladite poudre a une taille inférieure audit diamètre.

Dans l'exposé qui suit, on entend par surface spécifique, la surface spécifique B.E.T. déterminée par adsorption d'azote conformément à la norme ASTM D 3663-78 établie à partir de la méthode BRUNAUER-EMMETT-TELLER décrite dans le périodique « The Journal of American Society", 60, 309, (1938).

**Étape a) de mélange**

Conformément à l'invention, le procédé de préparation comprend une étape a) de mélange d'un ensemble comprenant au moins une poudre de $Cu_2(OH)_2CO_3$, une poudre d'un oxyde d'un métal choisi dans le groupe constitué par le cuivre, le zinc, le fer, le manganèse et leur mélange, et au moins un liant.

Dans une variante du procédé selon l'invention, ledit oxyde d'un métal est avantageusement l'oxyde de cuivre, de formule CuO. Dans cette variante, ledit ensemble est avantageusement exempt d'oxyde de zinc.

Selon une autre variante du procédé selon l'invention, ledit oxyde d'un métal est avantageusement l'oxyde de zinc ZnO. Dans cette variante, ledit ensemble est avantageusement exempt de poudre d'oxyde de cuivre.

Selon une variante préférée du procédé selon l'invention, ledit ensemble comprend une poudre d'oxyde de cuivre CuO et une poudre d'oxyde de zinc ZnO.

L'ensemble est avantageusement mélangé dans l'étape a) à sec, c'est-à-dire sans ajout de liquide. Ladite étape a) peut être mise en oeuvre par exemple dans un malaxeur ou dans tout autre type de mélangeur. Cette étape permet d'obtenir un mélange homogène des constituants pulvérulents.

Dans un arrangement préféré du procédé selon l'invention où ledit ensemble comprend une poudre de CuO, la poudre de CuO est avantageusement obtenue par décomposition partielle d'une ou plusieurs poudres de $Cu_2(OH)_2CO_3$. Cette décomposition partielle peut être réalisée par exemple par un traitement thermique d'une ou plusieurs poudres de $Cu_2(OH)_2CO_3$ ou de l'ensemble de l'étape a) à des températures comprises entre 100 et 300°C, de préférence entre 150 et 300°C, de préférence entre 200 et 300°C, pendant une durée comprise entre 1 et 12 h. Elle aboutit à la transformation d'une fraction de la poudre de $Cu_2(OH)_2CO_3$ en poudre de CuO, la fraction transformée dépendant de la durée et de la température du traitement thermique.

Dans un arrangement préféré du procédé selon l'invention où ledit ensemble comprend une poudre de CuO, le diamètre médian du mélange poudre de $Cu_2(OH)_2CO_3$ et poudre de CuO, noté $D_{50}$, est inférieur à 45 $\mu$m.

La teneur en poudre(s) d'oxyde d'un métal choisi dans le groupe constitué par le cuivre, le zinc, le fer, le manganèse et leur mélange introduite(s) dans l'ensemble mélangé lors de l'étape a) est exprimée par le ratio de la masse de poudre(s) d'oxyde(s) métallique(s) introduite(s) dans l'ensemble mélangé lors de l'étape a) sur la masse totale de poudre(s) de malachite et de poudre(s) d'oxyde(s) métallique introduites dans l'ensemble mélangé lors de l'étape a), soit en d'autre terme par le ratio (quantité de poudre(s) d'oxyde d'un métal choisi dans le groupe constitué par le cuivre, le zinc, le fer, le manganèse et leur mélange introduite(s) dans l'ensemble mélangé lors de l'étape a)) / (quantité de poudre(s) d'oxyde d'un métal choisi dans le groupe constitué par le cuivre, le zinc, le fer, le manganèse et leur mélange et de $Cu_2(OH)_2CO_3$ introduites dans l'ensemble mélangé lors de l'étape a)). Ce ratio est compris entre 0,01 et 1, de préférence entre 0,05 et 1, de préférence entre 0,05 et 0,95, de préférence entre 0,05 et 0,7, de préférence entre 0,1 et 0,6.

### Sources de $Cu_2(OH)_2CO_3$

La poudre de $Cu_2(OH)_2CO_3$ est issue de toute source connue de l'Homme du métier. Le diamètre médian noté $D_{50}$ est avantageusement compris entre 1 et 100 $\mu$m, de manière préférée entre 4 et 80 $\mu$m, de préférence entre 4 et 50 $\mu$m. Dans un arrangement particulier, ledit ensemble ne comprend qu'une poudre de malachite dont le diamètre médian est compris entre 1 et 100 $\mu$m, de manière préférée entre 4 et 80 $\mu$m, de préférence entre 4 et 50 $\mu$m.

Dans un arrangement particulier, la poudre de $Cu_2(OH)_2CO_3$ présente avantageusement une distribution bimodale. Ladite poudre de malachite comprend de 0,1 à 99,9% poids, avantageusement de 2 à 99,9% poids, de manière préférée de 5 à 99,9% poids, de manière très préférée de 5 à 99% poids, préférentiellement de 5 à 90% poids et très préférentiellement de 5 à 85% poids de particules de malachite dont le $D_{50}$ est compris entre 1 et 15 $\mu$m, de manière préférée entre 1 et 10 $\mu$m, et de manière très préférée entre 4 et 9 $\mu$m, et de 99,9 à 0,1% poids, avantageusement de 98 à 0,1% poids, de manière préférée de 95 à 0,1% poids, de manière très préférée de 95 à 1% poids, préférentiellement de 95 à 10% poids et très préférentiellement de 95 à 15% poids de particules de malachite dont le $D_{50}$ est compris entre 25 et 100 $\mu$m, de manière préférée entre 25 et 80 $\mu$m, préférentiellement entre 30 et 50 $\mu$m, le pourcentage poids étant exprimé relativement au poids total de malachite. Une distribution bimodale améliore la résistance mécanique du solide final obtenu.

Alternativement, ledit ensemble comprend au moins deux poudres de malachite de granulométries différentes. Dans cet arrangement, ledit ensemble comprend de 0,1 à 99,9% poids, avantageusement de 2 à 99,9% poids, de manière préférée de 5 à 99,9% poids, de manière très préférée de 5 à 99% poids, préférentiellement de 5 à 90% poids et très préférentiellement de 5 à 85% poids d'une première poudre de malachite dont le $D_{50}$ est compris entre 1 et 15 $\mu$m, de manière préférée entre 1 et 10 $\mu$m, et de manière très préférée entre 4 et 9 $\mu$m, et de 99,9 à 0,1% poids, avantageusement de 98 à 0,1% poids, de manière préférée de 95 à 0,1% poids, de manière très préférée de 95 à 1% poids, préférentiellement de 95 à 10% poids et très préférentiellement de 95 à 15% poids d'une deuxième poudre de malachite dont le $D_{50}$ est compris entre 25 et 100 $\mu$m, de manière préférée entre 25 et 80 $\mu$m, préférentiellement entre 30 et 50 $\mu$m, le pourcentage poids étant exprimé par rapport au poids total des poudres de malachite.

### Source de CuO

La poudre de CuO peut être issue de toutes sources connues de l'Homme du métier. Elle est avantageusement issue de procédés de précipitation, ou de la calcination de précurseur de CuO tels que la malachite, de formule $Cu_2(OH)_2CO_3$.

Les poudres d'oxyde de cuivre utilisées dans le procédé selon l'invention présentent habituellement une surface spécifique comprise entre 10 et 80 $m^2.g^{-1}$, de préférence entre 30 et 70 $m^2.g^{-1}$.

Le diamètre médian $D_{50}$ de ladite poudre est avantageusement comprise entre 1 et 50 $\mu$m, de manière préférée entre 2 et 35 $\mu$m, de façon avantageuse entre 5 et 35 $\mu$m et de manière très avantageuse entre 20 et 35 $\mu$m.

L'utilisation de poudre de CuO en combinaison avec la poudre de $Cu_2(OH)_2CO_3$ pour la préparation du solide par le procédé selon l'invention permet d'obtenir des solides présentant des performances accrues en terme de résistance mécanique et de captation de composés soufrés.

### Source de ZnO

La poudre de ZnO est avantageusement issue de toutes sources connues de l'Homme du métier, telle que les deux grands procédés industriels de fabrication de l'oxyde de zinc, connus de l'Homme du métier sous les noms de procédé indirect, dit procédé français, et procédé direct, dit procédé américain, décrits par exemple dans FR 2940967.

Les poudres d'oxyde de zinc utilisées dans le procédé selon l'invention présentent habituellement une surface spécifique comprise entre 10 et 80 $m^2.g^{-1}$, de préférence entre 30 et 60 $m^2.g^{-1}$.

La poudre de ZnO présente un diamètre médian $D_{50}$ avantageusement inférieur à 60 $\mu$m, de manière préférée inférieur à 30 $\mu$m et de manière très préférée inférieur à 10 $\mu$m. De manière très avantageuse, le diamètre médian de la poudre de ZnO sera compris entre 2 et 5 $\mu$m.

### Sources de fer et de manganèse

La poudre d'oxyde de fer et la poudre d'oxyde de manganèse sont issues de toutes sources connues de l'Homme du métier.

La poudre d'oxyde de fer présente un diamètre médian $D_{50}$ avantageusement inférieur à 60 $\mu$m, de manière préférée inférieur à 30 $\mu$m et de manière très préférée inférieur à 10 $\mu$m. De manière très avantageuse, le diamètre médian de la poudre d'oxyde de fer sera compris entre 2 et 5 $\mu$m.

La poudre d'oxyde de manganèse présente un diamètre médian $D_{50}$ avantageusement inférieur à 60 $\mu$m, de manière préférée inférieur à 30 $\mu$m et de manière très préférée inférieur à 10 $\mu$m. De manière très avantageuse, le diamètre médian de la poudre d'oxyde de manganèse sera compris entre 2 et 5 $\mu$m.

### Liants

L'ensemble mélangé dans l'étape a) comprend au moins un liant. Ledit liant permet la mise en forme dudit adsorbant tout en lui conférant une bonne résistance mécanique. Ledit liant est avantageusement sous forme de poudre.

Tout liant bien connu de l'Homme du métier peut être utilisé. En particulier, ledit liant peut être choisi de façon avantageuse, par exemple, parmi les argiles, tels que les minéraux de type kaolinite, les minéraux de type palygorskite, et les minéraux argileux de type smectite, tels que la montmorillonite ou la bentonite. Ledit liant peut également être choisi dans le groupe constitué par l'alumine, un précurseur d'alumine, qui est préférentiellement de la boehmite, la silice et leurs mélanges. Il est tout à fait possible de combiner l'utilisation de liants de différente nature, tel que par exemple un liant de type "alumine" et un liant de type "argile", ou encore deux argiles de nature différente. Selon un mode préféré de préparation du solide selon l'invention, le liant est une argile de type bentonite.

La quantité de liant mise en oeuvre dans le procédé de préparation selon l'invention est telle que ledit liant représente moins de 50% poids du solide préparé (exprimée sur la base de la matière sèche totale, c'est-à-dire après perte au feu), et dépend de l'application ciblée.

Que ce soit pour les composés du cuivre, le(s) oxyde(s) métallique(s), ou le(s) liant(s), il est tout à fait envisageable de procéder à des mélanges de plusieurs sources de chaque composé.

Lorsque le solide préparé selon l'invention est utilisé pour la désulfuration de charge liquide ou gaz, la teneur en liant dudit solide est de préférence comprise entre 15% poids et 25% poids (exprimée sur la base de la matière sèche totale, soit après perte au feu).

### Étape b) de peptisation et de malaxage

Conformément à l'invention, le procédé de préparation d'un adsorbant comprend une étape b) de mise en contact du mélange de l'étape a) avec une solution aqueuse et malaxage de la pâte obtenue.

Cette étape aboutissant à l'obtention d'une pâte, permet la dispersion des constituants, à savoir l'hydroxycarbonate de cuivre, le(s) oxyde(s) métallique(s) éventuellement présent(s), ainsi que le(s) liant(s), et une dissolution partielle des constituants.

Sous l'action de la solution aqueuse, les phénomènes de dispersion et de dissolution des particules d'hydroxycarbonate de cuivre, des oxydes métalliques éventuellement présent(s) et de liant opérant lors du malaxage par mise en contact des différents constituants sont favorisés. Sans vouloir s'attacher de manière restrictive à une quelconque théorie, il est toutefois possible d'émettre l'hypothèse qu'une meilleure dispersion tant de l'hydroxycarbonate de cuivre, que des oxyde(s) métallique(s) éventuellement présent(s) et des particules de liant(s) va dans le sens de l'amélioration de la résistance mécanique obtenue in fine par ledit procédé de préparation.

Ladite solution aqueuse contient avantageusement un agent peptisant acide ou basique.

Ledit agent peptisant acide peut être l'acide nitrique, l'acide chlorhydrique, ou tout autre acide connu de l'Homme du métier, par exemple un acide inorganique tel que l'acide fluorhydrique, l'acide bromhydrique, l'acide chlorhydrique, l'acide nitrique, nitreux, sulfonique, sulfurique, perchlorique, ou bien encore un acide organique mono ou di-carboxylique tel que l'acide acétique, propionique ou butanoique.

Dans un arrangement particulier du procédé selon l'invention, la peptisation est opérée en employant une solution aqueuse acide contenant de l'acide nitrique. Le ratio masse de $HNO_3$/masse d'oxydes métalliques est compris entre 0,5 et 10% poids, de préférence compris entre 0,5 et 6%, et avantageusement compris entre 0,5 et 3%.

La masse d'oxydes est calculée selon la relation suivante :

$$masse\ oxydes = m_{oxydes} + \frac{2 \cdot M_{CuO}}{M_{Cu_2(OH)_2CO_3}} \cdot m_{Cu_2(OH)_2CO_3}$$

Avec $m_{oxydes}$ la masse d'oxydes introduite initialement lors de l'étape a) sous forme de poudre d'oxydes d'un ou plusieurs métal choisi dans le groupe constitué par le cuivre, le zinc, le fer, le manganèse et leur mélange, $m_{Cu2(OH)2CO3}$ la masse de malachite $Cu_2(OH)_2CO_3$ introduite lors de l'étape a), $M_{CuO}$ la masse molaire du CuO (= 80 g/mol), $M_{Cu2(OH)2CO3}$ la masse molaire de la malachite $Cu_2(OH)_2CO_3$ (= 222 g/mol).

Ledit agent peptisant basique peut être une base inorganique telle que la soude, la potasse, l'ammoniaque, ou bien encore une base organique telle qu'une amine, composé à ammonium quaternaire, choisie par exemple parmi les alkyl-éthanol amines ou les alkyl-amines éthoxylées.

Dans un arrangement particulier du procédé selon l'invention, la peptisation est opérée en employant une solution aqueuse contenant un agent peptisant basique, telle que de préférence un agent peptisant basique choisi dans le groupe constitué par la soude, la potasse, l'ammoniaque, l'hydroxyde de tétraéthylammonium (TEAOH), le carbonate d'ammonium et leurs mélanges. Le ratio masse d'agent peptisant basique / masse d'oxydes métalliques est compris entre 1 et 10% poids, de préférence compris entre 2 et 8%, et avantageusement compris entre 2 et 5%. La masse d'oxydes est calculée selon la relation précédente.

Dans un autre arrangement particulier du procédé selon l'invention, la peptisation est opérée en utilisant dans l'étape b) une solution aqueuse sans acide ni base ajoutés. Il a été observé de manière surprenante qu'une peptisation à l'eau non additivée de base ou d'acide permet d'obtenir un solide présentant des performances améliorées en adsorption, en particulier des composés soufrés. Dans cet arrangement particulier, la solution aqueuse de ladite étape b) est avantageusement de l'eau déionisée, par exemple à l'aide d'une résine échangeuse d'ions.

La quantité de solution aqueuse mise en oeuvre est ajustée de façon à obtenir, à l'issue de la peptisation et quelle que soit la variante mise en oeuvre, une pâte qui ne coule pas mais qui n'est pas non plus trop sèche afin de permettre l'extrusion lors de l'étape c) dans des conditions convenables de pression bien connues de l'Homme du métier et dépendantes de l'équipement d'extrusion utilisé.

La mise en contact des réactifs ($Cu_2(OH)_2CO_3$, oxyde(s) métallique(s), liant(s), solution aqueuse) est réalisée par malaxage, en batch ou en continu.

Pour le malaxage en batch, les équipements tels que par exemple les malaxeurs équipés de bras en Z, à rouleau ou à cames sont connus de l'Homme du métier, mais tout autre équipement de malaxage peut également être utilisé.

Il est envisageable, au cours du malaxage de l'étape b) selon l'invention, d'incorporer un ou des adjuvants d'extrusion, permettant ainsi d'améliorer l'écoulement de la pâte dans la filière lors de l'extrusion. Ces adjuvants, bien connus de l'Homme du métier, peuvent par exemple être choisis parmi les acides aliphatiques mono-carboxyliques, les composés aromatiques alkylés, les sels d'acide sulphonique, les acides gras, la polyvinylpyridine, la polyvinylpyrrolidone, l'alcool polyvinylique, les dérivés cellulosiques.

Ces adjuvants sont généralement ajoutés à une teneur comprise entre 0,1% poids et 10% poids, de préférence comprise entre 0,2% poids et 8% poids, sur la base de la masse totale des constituants introduits dans le malaxeur.

La durée de malaxage est généralement comprise entre 5 et 60 min, de préférence entre 20 et 50 min. La vitesse de rotation des bras du malaxeur est comprise entre 10 et 75 tours/minute, de façon préférée entre 25 et 50 tours/minute.

**Étape c) d'extrusion**

Conformément à l'invention, le procédé de préparation d'un adsorbant comprend une étape c) d'extrusion de la pâte malaxée dans l'étape b) à une pression comprise entre 3 et 25 MPa.

Ladite étape c) d'extrusion peut être mise en oeuvre dans tout type d'extrudeuse, par exemple dans une extrudeuse piston, mono-vis ou bi-vis. La géométrie de la filière, qui confère leur forme aux extrudés, peut être choisie parmi les filières bien connues de l'Homme du métier. Ces filières peuvent être, par exemple, de forme cylindrique, trilobée, quadrilobée, cannelée ou à fentes.

Le diamètre des filières est fixé en fonction du diamètre des solides souhaités à l'issue de l'étape de calcination.

L'étape b) de mise en contact et de malaxage et l'étape c) d'extrusion peuvent avantageusement être mises en oeuvre dans un même équipement. Dans un exemple de cette mise en oeuvre, la pâte malaxée peut être extrudée directement en bout d'un malaxeur continu de type bi-vis. Dans un autre exemple de cette mise en oeuvre, un ou plusieurs malaxeurs batch sont reliés à une extrudeuse.

Les extrudés obtenus à l'issue de l'étape c) sont avantageusement séchés à une température comprise entre 70 et 160°C pendant une durée comprise entre 1 et 24 h avant d'être calcinés dans l'étape d). Ce séchage peut être avantageusement effectué sous air ou bien de préférence sous air humide. L'intérêt du séchage est d'évacuer de façon douce une partie des composés volatiles présents, la calcination directe du solide pouvant entrainer l'apparition de micro-fractures. Le séchage sous air humide permet d'évaporer lesdits composés volatiles plus lentement que le séchage sous air.

**Étape d) de calcination**

Conformément à l'invention, le procédé de préparation d'un adsorbant comprend une étape d) de calcination des extrudés à une température comprise entre 140°C et 500°C et une durée comprise entre 10 min et 6 heures, sous un flux gazeux comprenant de l'oxygène.

Ladite étape d) de calcination est réalisée sous un flux gazeux comprenant de l'oxygène. Ledit flux gazeux peut être avantageusement de l'air, ou un mélange gazeux comprenant un gaz inerte (par exemple de l'azote) et de l'oxygène. Ledit flux gazeux comprend de préférence au moins 5% volume, préférentiellement au moins 10% volume d'oxygène. Ledit flux gazeux comprend également avantageusement de l'eau, et de manière préférée jusqu'à 3% volume d'eau.

Ladite étape d) de calcination est réalisée à une température comprise entre 140°C et 500°C, de préférence entre 200°C et 500°C, et de manière préférée entre 200°C et 350°C, pendant une durée comprise entre 10 min et 6 h, de préférence entre 10 min et 4 h, préférentiellement entre 10 min et 3 h, très préférentiellement entre 10 min et 2 h, et de manière très préférée entre 15 min et 1 h.

L'étape de calcination permet en particulier de convertir une fraction de malachite en oxyde de cuivre.

A l'issue de l'étape d) de calcination, les extrudés présentent un diamètre compris entre 1 et 10 mm, de manière préférée entre 1 et 5 mm, et de manière très préférée entre 1,5 et 3,5 mm.

Le solide selon l'invention, obtenu par extrusion, a une forme proche d'un bâtonnet cylindrique. Ces bâtonnets peuvent selon les besoins être introduits dans un équipement permettant d'arrondir leur surface, tel qu'un drageoir, ou tout autre équipement permettant leur sphéronisation.

Le pourcentage massique d'oxydes (teneur en oxyde + CuO provenant de la décomposition de la malachite) contenus dans le solide après perte au feu peut être déterminé selon la relation suivante :

$$\% masse\ oxydes\ après\ PAF = \frac{m_{oxydes} + \frac{2 \cdot M_{CuO}}{M_{Cu_2(OH)_2CO_3}} \cdot m_{Cu_2(OH)_2CO_3}}{m_{liant} + m_{oxydes} + \frac{2 \cdot M_{CuO}}{M_{Cu_2(OH)_2CO_3}} \cdot m_{Cu_2(OH)_2CO_3}}$$

Avec $m_{oxydes}$ la masse d'oxydes introduite initialement lors de l'étape a) sous forme de poudre d'oxydes d'un ou plusieurs métal choisi dans le groupe constitué par le cuivre, le zinc, le fer, le manganèse et leur mélange, $m_{liant}$ la masse de liant introduite lors de l'étape a), $m_{Cu2(OH)2CO3}$ la masse de malachite $Cu_2(OH)_2CO_3$ introduite lors de l'étape a), $M_{CuO}$ la masse molaire du CuO (= 80 g/mol), $M_{Cu2(OH)2CO3}$ la masse molaire de la malachite $Cu_2(OH)_2CO_3$ (= 222 g/mol).

Le solide préparé selon l'invention comprend au moins :

- 50 à 99% poids, de préférence 60 à 95% poids, de manière plus préférée 75 à 85% poids équivalent en masse oxyde CuO + oxyde métallique éventuellement présent mesuré après perte au feu à 550°C pendant 2 h, teneur déterminée selon la relation précédente.

- 1 à 50% poids, de préférence 5 à 40% poids, de manière plus préférée 15 à 25% poids d'un liant, le pourcentage masse étant mesuré après perte au feu.

Ces teneurs en % poids sont exprimées par rapport à la masse totale du solide préparé au moyen du procédé selon l'invention, et mesurées après décomposition des précurseurs à 550°C pendant 2 h.

**Propriétés du solide obtenu par le procédé selon l'invention**

Les propriétés mécaniques sont déterminées par le test d'écrasement grain à grain (EGG) décrit par la méthode ASTM D 6175-3. Celle-ci consiste à mesurer la force de rupture de chaque particule d'un échantillon représentatif comprenant au moins 50 particules. Le résultat est pondéré par la longueur de l'extrudé. La valeur d'EGG est la moyenne des forces de rupture mesurées et ramenées à l'unité de longueur de l'extrudé (exprimée en daN.mm$^{-1}$) pour l'ensemble des particules de l'échantillon.

Dans le cas des solides préparés selon l'invention, la valeur d'EGG est supérieure à 0,7 daN.mm$^{-1}$ (décaNewton

par millimètre de longueur d'extrudé), de préférence supérieure à 0,9 daN.mm$^{-1}$, et ce quelles que soient les teneurs en hydroxycarbonate de cuivre mises en oeuvre.

De plus, les solides obtenus utilisés comme adsorbants présentent des performances de désulfuration améliorées vis-à-vis du traitement des gaz et des liquides contenant les composés soufrés, en particulier $H_2S$, mercaptans, COS et $CS_2$.

L'invention a également pour objet l'utilisation du solide préparé par le procédé selon l'invention.

Le solide préparé selon l'invention peut être utilisé pour purifier des charges gazeuses telles que par exemple des hydrocarbures gazeux tels que des gaz naturels, des biogaz, des gaz contenant du dioxyde de carbone $CO_2$, ou des gaz de synthèse tels que ceux mis en oeuvre dans les installations de cogénération, dans les unités de synthèse chimique telles que les unités de synthèse du méthanol ou de synthèse Fischer-Tropsch, ou des liquides tels que les hydrocarbures utilisés comme charges dans les unités de reformage catalytique, d'isomérisation, ou d'hydrogénation.

Le solide préparé selon l'invention est avantageusement utilisé pour purifier toute charge gazeuse ou liquide contenant entre autres, des composés soufrés tels que $H_2S$, COS et/ou $CS_2$, et/ou des mercaptans, à une pression comprise entre 0,1 et 25 MPa, de préférence entre 0,1 et 15 MPa, et une température comprise entre 0 et 450°C, de préférence entre 15 et 300°C, de manière préférée entre 15 et 250°C.

En particulier, le solide préparé selon l'invention peut être avantageusement utilisé pour purifier la charge d'une unité de synthèse Fischer-Tropsch, en le mettant en oeuvre dans un réacteur opérant à une pression comprise entre 0,1 et 15 MPa, de préférence comprise entre 1,5 et 5,0 MPa, à une température comprise entre 0 et 400°C, de préférence entre 0 et 220°C, de préférence entre 15 et 180°C.

Ledit solide préparé selon l'invention peut également être utilisé afin d'éliminer certains hétéroéléments, tels que par exemple le phosphore ou ses composés tel que la phosphine $PH_3$, et/ou le chlore particulièrement sous sa forme HCl, présents dans des effluents liquides ou gazeux, de préférence à une pression comprise entre 0,1 et 25 MPa, de préférence entre 1 et 15 MPa, et une température comprise entre 0 et 200°C.

Ledit solide préparé selon l'invention peut également être utilisé afin d'éliminer les métaux lourds, tels que par exemple le mercure, et/ou l'arsenic ou ses composés tel que l'arsine $AsH_3$, présents dans des effluents liquides ou gazeux, de préférence à une pression comprise entre 0,1 et 25 MPa, de préférence entre 1 et 15 MPa, et une température comprise entre 0 et 200°C.

En effet, si la charge à purifier contient en plus des composés soufrés du mercure, le solide préparé au moyen du procédé selon l'invention permet également l'élimination du mercure présent dans la charge à traiter.

Le solide préparé selon l'invention peut avantageusement subir une étape de sulfuration avant sa mise en oeuvre industrielle dans un procédé de captation de mercure, si la charge à traiter ne contient pas de composés soufrés.

Le solide préparé selon l'invention peut également être utilisé afin d'éliminer le monoxyde de carbone CO présent dans des effluents liquides ou gazeux, à une température comprise entre 0 et 200°C et une pression comprise entre 0,1 et 25 MPa.

Le solide préparé selon l'invention est utilisé en mettant en contact la charge gazeuse ou liquide à traiter avec ledit solide dans un réacteur, qui peut être un réacteur en lit fixe, un réacteur radial, ou bien encore un réacteur en lit fluidisé.

Le solide préparé selon l'invention peut être réduit sous atmosphère réductrice telle qu'un flux d'hydrogène, un gaz de synthèse puis utilisé comme catalyseur des réactions de Dussan, ou « Water Gas Shift » selon la terminologie anglo-saxonne, ou comme catalyseur de la synthèse de méthanol à partir de gaz de synthèse.

Des conditions typiques d'utilisation du solide comme catalyseur de la réaction de synthèse de méthanol sont une température comprise entre 100 et 500°C, de préférence entre 150 et 300°C, voire de préférence entre 220 et 280°C, et une pression comprise entre 0,1 et 25 MPa, de préférence entre 1 et 15 MPa, et de manière encore plus préférée entre 5 et 10 MPa.

Des conditions typiques d'utilisation du solide comme catalyseur de la réaction de Dussan sont une température comprise entre 100 et 500°C, de préférence entre 150 et 300°C, voire de préférence entre 180 et 250°C, et une pression comprise entre 0,1 et 25 MPa, de préférence entre 1 et 15 MPa, et de manière encore plus préférée entre 1,5 et 10 MPa.

**DESCRIPTION DES FIGURES**

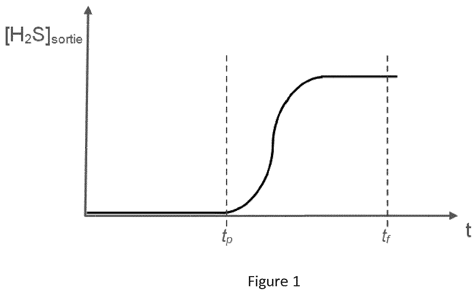

La Figure 1 est une représentation schématique d'une courbe de perçage pouvant être obtenue selon le protocole de mesure de la capacité de captation des impuretés par les solides, décrit ci-après. Sur la Figure 1, $t_p$ est le temps de perçage et $t_f$, le temps de fin de perçage.

**EXEMPLES**

**Protocole de mesure de la capacité de captation des impuretés par les solides préparés**

La capacité de captation en impuretés des solides préparés par le procédé selon l'invention est mesurée par un test de perçage.

Pour le test de détermination de la capacité de captation de H$_2$S, le test est réalisé à une température de 50°C, à une pression de 0,3 MPa, et avec une vitesse volumique horaire (VVH) de 1530 h$^{-1}$. Par vitesse volumique horaire, on entend le ratio du débit volumique de gaz mesuré à 0°C et 1 atm sur le volume de solide testé. Le gaz utilisé pour le test contient 0,9%vol. de H$_2$S dans de l'azote. La teneur en H$_2$S présente dans le gaz en sortie du réacteur contenant le solide est déterminée par chromatographie en phase gazeuse.

Pour le test de détermination de la capacité de captation de méthylmercaptan CH$_3$SH, le test est réalisé à une température de 50°C, à une pression de 0,3 MPa, et avec une vitesse volumique horaire (VVH) de 1530 h$^{-1}$. Par vitesse volumique horaire, on entend le ratio du débit volumique de gaz mesuré à 0°C et 1 atm sur le volume de solide testé. Le gaz utilisé pour le test contient 0,2%vol. de CH$_3$SH dans de l'azote. La teneur en CH$_3$SH présente dans le gaz en sortie du réacteur contenant le solide est déterminée par chromatographie en phase gazeuse.

Pour le test de détermination de la capacité de captation d'éthylmercaptan C$_2$H$_5$SH, le test est réalisé à une température de 50°C, à une pression de 0,3 MPa, et avec une vitesse volumique horaire (VVH) de 1530 h$^{-1}$. Par vitesse volumique horaire, on entend le ratio du débit volumique de gaz mesuré à 0°C et 1 atm sur le volume de solide testé. Le gaz utilisé pour le test contient 0,9%vol. de C$_2$H$_5$SH dans de l'azote. La teneur en C$_2$H$_5$SH présente dans le gaz en sortie du réacteur contenant le solide est déterminée par chromatographie en phase gazeuse.

Pour le test de détermination de la capacité de captation de monoxyde de carbone CO, le test est réalisé à une température de 200°C, à une pression de 0,1 MPa, et avec une vitesse volumique horaire (VVH) de 2600 h$^{-1}$. Par vitesse volumique horaire, on entend le ratio du débit volumique de gaz mesuré à 0°C et 1 atm sur le volume de solide testé. Le gaz utilisé pour le test contient 1,8%vol. de CO. La teneur en CO présente dans le gaz en sortie du réacteur contenant le solide est déterminée par chromatographie en phase gazeuse.

La capacité de captation d'une espèce $i$ par le solide préparé par le procédé selon l'invention est déterminée en effectuant un bilan matière. La capacité de captation de l'espèce $i$, telle que définie au titre de la présente invention, correspond à la quantité d'espèce $i$ accumulée par le solide avant perçage (c'est-à-dire au temps $t_p$ indiqué sur la Figure 1, qui représente schématiquement une courbe de perçage), celle-ci étant calculée à l'aide de la relation suivante :

$$q_i = M_i D_i^E \int_0^{t_p} \left( 1 - \frac{C_i^S}{C_i^E} \right) dt$$

Avec :

$q_i$ : la masse de l'espèce $i$ captée par le solide (en g),
$D_i^E$ : le débit de l'espèce $i$ entrant (en mol.min$^{-1}$),
$M_i$ : la masse molaire de l'espèce $i$ (en g.mol$^{-1}$),
$C_i^E$ : la teneur en espèce $i$ du gaz en entrée,
$C_i^S$ : la teneur en espèce $i$ en sortie de réacteur,
$t_p$ : le temps nécessaire au perçage de l'espèce $i$ (en min) tel que représenté sur la Figure 1.

Sur la Figure 1, $t_p$ est le temps de perçage et $t_f$, le temps de fin de perçage.
La capacité de captation de l'espèce $i$ de le solide testé est donnée par la relation :

$$C_i = \frac{q_i}{m}$$

avec m la masse d'adsorbant mise en oeuvre lors du test.

**Exemple 1 : selon l'art antérieur**

Dans l'exemple 1, les solides de référence A1, A2, A3, A4 et A5 sont préparés selon le mode opératoire suivant :

a) mélange d'un ensemble comprenant une poudre de Cu$_2$(OH)$_2$CO$_3$ et un liant ;

b) mise en contact du mélange de l'étape a) avec une solution aqueuse (peptisation) et malaxage de la pâte obtenue dans un malaxeur muni de bras en Z, pendant 30 minutes avec une vitesse de ration des bras de 25 tours.minutes$^{-1}$ ;

c) extrusion de la pâte malaxée dans l'étape b) à l'aide d'une extrudeuse piston, en cylindres de diamètre 3 mm et de longueur 5 à 10 mm à une pression variable selon les solides ;

d) calcination des extrudés à une température variable selon les solides, conduite pendant une durée de 1 heure, sous flux d'air.

Une argile de type bentonite a été utilisée comme liant.

Les teneurs en CuO ou pourcentage massique d'oxydes (CuO provenant de la décomposition de la malachite) après perte au feu (550°C pendant 2 heures) sont de 80% poids pour les solides A1, A2, A3 et A4, et de 60% poids pour le solide A5 (le liant de type bentonite constituant le complément). Ces teneurs sont déterminées selon la relation suivante :

$$\%poids\ CuO\ après\ PAF = \frac{\frac{2 \cdot M_{CuO}}{M_{Cu_2(OH)_2CO_3}} \cdot m_{Cu_2(OH)_2CO_3}}{m_{liant} + \frac{2 \cdot M_{CuO}}{M_{Cu_2(OH)_2CO_3}} \cdot m_{Cu_2(OH)_2CO_3}}$$

Avec $m_{liant}$ la masse de liant introduite lors de l'étape a), $m_{Cu2(OH)2CO3}$ la masse de malachite $Cu_2(OH)_2CO_3$ introduite lors de l'étape a), $M_{CuO}$ la masse molaire du CuO (= 80 g/mol), $M_{Cu2(OH)2CO3}$ la masse molaire de la malachite $Cu_2(OH)_2CO_3$ (= 222 g/mol).

Pour les solides A1, A2 et A3, la quantité de base NaOH est de 4% masse rapportée à la quantité totale de $Cu_2(OH)_2CO_3$ introduite.

Pour les solides A4 et A5, de l'eau déionisée est utilisée comme solution aqueuse pour l'étape b) de malaxage.

Au cours de l'extrusion, la pression varie entre 50 et 150 bar selon la formulation utilisée.

Les formulations des solides A1, A2, A3, A4 et A5 sont données dans le tableau 1.

Tableau 1

| Désignation | Ratio CuO/(CuO + Cu$_2$(OH)$_2$CO$_3$) introduits lors de l'étape a) | %oxydes après PAF | Liant | Peptisation | Température de calcination (°C) / durée (h) | Test de captation de H$_2$S : Soufre capté à tp (g S/g solide) | EGG (daN. mm$^{-1}$) |
|---|---|---|---|---|---|---|---|
| Solide A1 | 0 | 80% | Bentonite | 4% NaOH | 140°C / 1h | 0,22 | 0,5 |
| Solide A2 | 0 | 80% | Bentonite | 4% NaOH | 250°C / 1h | 0,25 | 0,5 |
| Solide A3 | 0 | 80% | Bentonite | 4% NaOH | 350°C / 1h | 0,24 | 0,5 |
| Solide A4 | 0 | 80% | Bentonite | eau | 250°C / 1h | 0,26 | 0,3 |
| Solide A5 | 0 | 60% | Bentonite | eau | 250°C / 1h | 0,16 | 0,6 |

La résistance mécanique des extrudés est déterminée par un essai mécanique de type écrasement grain à grain (EGG) tel que décrit précédemment.

La résistance mécanique des solides A1 à A5 est trop faible compte tenu des contraintes liées à une utilisation industrielle, Les valeurs d'EGG mesurées sont en effet inférieures à 0,7 daN.mm$^{-1}$, indépendamment de la température de calcination et de la présence ou non de soude lors de la peptisation.

L'augmentation de la teneur en liant et la diminution de la teneur en malachite dans le solide A5 aboutit à une légère amélioration de la résistance mécanique qui reste toutefois insuffisante, au détriment de leur capacité de captation de soufre. Dans ce dernier cas, la capacité en soufre devient faible comparée à celle des solides selon l'invention.

**Exemple 2 : selon l'invention**

Dans l'exemple 2, les solides référencés B1 à B4 selon l'invention sont préparés par malaxage-extrusion selon le mode opératoire suivant :

a) mélange d'un ensemble comprenant une poudre de $Cu_2(OH)_2CO_3$, une poudre de CuO, et un liant ;

b) mise en contact du mélange de l'étape a) avec une solution aqueuse (peptisation) et malaxage de la pâte obtenue dans un malaxeur muni de bras en Z, pendant 30 minutes avec une vitesse de rotation des bras de 25 tours.minutes$^{-1}$ ;

c) extrusion de la pâte malaxée dans l'étape b) à l'aide d'une extrudeuse piston, en cylindres de diamètre 3 mm et de longueur 5 à 10 mm à une pression variable selon les solides ;

d) calcination des extrudés à une température variable selon les exemples, conduite pendant une durée de 1 heure, sous flux d'air.

Une argile de type bentonite a été utilisée comme liant.

La teneur en CuO ou pourcentage massique d'oxydes (teneur en oxyde + CuO provenant de la décomposition de la malachite) après perte au feu (550°C pendant 2 heures) est de 80% poids pour les solides B1 à B4. Cette teneur est déterminée selon la relation suivante :

$$\%poids\ CuO\ après\ PAF = \frac{m_{CuO} + \dfrac{2 \cdot M_{CuO}}{M_{Cu_2(OH)_2CO_3}} \cdot m_{Cu_2(OH)_2CO_3}}{m_{liant} + m_{CuO} + \dfrac{2 \cdot M_{CuO}}{M_{Cu_2(OH)_2CO_3}} \cdot m_{Cu_2(OH)_2CO_3}}$$

Avec $m_{CuO}$ la masse de CuO introduite initialement lors de l'étape a) sous forme de poudre de CuO, $m_{liant}$ la masse de liant introduite lors de l'étape a), $m_{Cu2(OH)2CO3}$ la masse de malachite $Cu_2(OH)_2CO_3$ introduite lors de l'étape a), $M_{CuO}$ la masse molaire du CuO (= 80 g/mol), $M_{Cu2(OH)2CO3}$ la masse molaire de la malachite $Cu_2(OH)_2CO_3$ (= 222 g/mol).

Pour le solide B1, la quantité de base NaOH est de 4% poids rapportée aux quantités totales de $Cu_2(OH)_2CO_3$ et de CuO introduites.

Pour les solides B2, B3 et B4, de l'eau déionisée est utilisée comme solution aqueuse pour l'étape b) de malaxage.

Au cours de l'extrusion, la pression varie entre 50 et 200 bar selon la formulation utilisée.

Les formulations des solides sont données dans le tableau 2.

Tableau 2

| Désignation | Ratio CuO/(CuO + Cu$_2$(OH)$_2$CO$_3$) introduits lors de l'étape a) | %oxydes après PAF | Liant | Peptisation | Température de calcination (°C) / durée (h) | Test de captation de H$_2$S : Soufre capté à tp (g S/g solide) | EGG (daN. mm$^{-1}$) |
|---|---|---|---|---|---|---|---|
| Solide B1 | 0,5 | 80% | Bentonite | 4% NaOH | 350°C / 1h | 0,2 | 1,8 |
| Solide B2 | 0,5 | 80% | Bentonite | eau | 350°C / 1h | 0,23 | 1,4 |
| Solide B3 | 0,5 | 80% | Bentonite | eau | 250°C / 1h | 0,22 | 1,2 |
| Solide B4 | 0,2 | 80% | Bentonite | eau | 350°C / 1h | 0,27 | 1,0 |

L'utilisation conjointe de CuO et de $Cu_2(OH)_2CO_3$ dans le procédé de préparation selon l'invention permet d'obtenir des solides présentant des propriétés mécaniques satisfaisantes (EGG supérieure à 0,7 daN.mm$^{-1}$). Par ailleurs, les solides présentent des capacités de sulfuration satisfaisantes, supérieures à 0,15 grammes de soufre/gramme de solide dans les conditions de test décrites dans le document.

**Exemple 3 : selon l'invention**

Dans l'exemple 3, les solides référencés C1 et C2 selon l'invention sont préparés par malaxage-extrusion selon le mode opératoire suivant :

a) mélange d'un ensemble comprenant une poudre de $Cu_2(OH)_2CO_3$, une poudre de ZnO, et un liant ;

b) mise en contact du mélange de l'étape a) avec une solution aqueuse (peptisation) et malaxage de la pâte obtenue dans un malaxeur muni de bras en Z, pendant 30 minutes avec une vitesse de rotation des bras de 25 tours.minutes$^{-1}$ ;

c) extrusion de la pâte malaxée dans l'étape b) à l'aide d'une extrudeuse piston, en cylindres de diamètre 3 mm et de longueur 5 à 10 mm à une pression variable selon les solides ;

d) calcination des extrudés à une température variable selon les exemples, conduite pendant une durée de 1 heure, sous flux d'air.

Une argile de type bentonite a été utilisée comme liant.

La teneur en CuO + ZnO ou pourcentage massique d'oxydes (teneur en oxyde + CuO provenant de la décomposition de la malachite) après perte au feu (550°C pendant 2 heures) est de 80% poids pour les solides C1 et C2. Cette teneur est déterminée selon la relation suivante :

$$\%poids\ oxydes\ après\ PAF = \frac{m_{ZnO} + \dfrac{2 \cdot M_{CuO}}{M_{Cu_2(OH)_2CO_3}} \cdot m_{Cu_2(OH)_2CO_3}}{m_{liant} + m_{ZnO} + \dfrac{2 \cdot M_{CuO}}{M_{Cu_2(OH)_2CO_3}} \cdot m_{Cu_2(OH)_2CO_3}}$$

Avec $m_{ZnO}$ la masse de ZnO introduite initialement lors de l'étape a) sous forme de poudre de ZnO, $m_{liant}$ la masse de liant introduite lors de l'étape a), $m_{Cu2(OH)2CO3}$ la masse de malachite $Cu_2(OH)_2CO_3$ introduite lors de l'étape a), $M_{CuO}$ la masse molaire du CuO (= 80 g/mol), $M_{Cu2(OH)2CO3}$ la masse molaire de la malachite $Cu_2(OH)_2CO_3$ (= 222 g/mol).

Pour les solides C1 et C2, la quantité de base NaOH est de 4% poids rapportée aux quantités totales de $Cu_2(OH)_2CO_3$ et de CuO introduites.

Au cours de l'extrusion, la pression varie entre 50 et 150 bar selon la formulation utilisée.

Les formulations des solides sont données dans le tableau 3.

Tableau 3

| Désignation | Ratio $ZnO/(ZnO + Cu_2(OH)_2CO_3)$ introduits lors de l'étape a) | %oxydes après PAF | Liant | Peptisation | Température de calcination (°C) / durée (h) | Test de captation de $H_2S$ : Soufre capté à tp (g S/g solide) | EGG (daN.mm$^{-1}$) |
|---|---|---|---|---|---|---|---|
| Solide C1 | 0,2 | 80% | Bentonite | 4% NaOH | 200°C / 1h | 0,19 | 1,0 |
| Solide C2 | 0,2 | 80% | Bentonite | 4% NaOH | 350°C / 1h | 0,19 | 0,9 |

L'utilisation conjointe de ZnO et de $Cu_2(OH)_2CO_3$ dans le procédé de préparation selon l'invention permet d'obtenir des solides présentant des propriétés mécaniques satisfaisantes (EGG supérieure à 0,7 $daN.mm^{-1}$). Par ailleurs, les solides présentent des capacités de sulfuration satisfaisantes, supérieures à 0,15 grammes de soufre/gramme de solide dans les conditions de test décrites dans le document.

**Exemple 4 : selon l'invention**

Dans l'exemple 4 présente les performances de captation du solide B3 selon l'invention, dont la préparation est décrite dans l'exemple 2.

Les performances de captation d'impuretés variées ont été déterminées selon le protocole de mesure de la capacité de captation des impuretés par les solides préparés, décrit plus haut.

Les capacités de captation des composés soufrés suivants $H_2S$, $CH_3SH$, $C_2H_5SH$, ainsi que la captation de monoxyde de carbone CO ont été évaluées dans les conditions des tests décrites dans le protocole.

Les résultats des tests sont présentés dans le tableau 4.

Tableau 4

| Solide testé | Test de captation de $H_2S$ : Soufre capté à tp (g S/g solide) | Test de captation de $CH_3SH$ : Soufre capté à tp (g S/g solide) | Test de captation de $C_2H_5SH$ : Soufre capté à tp (g S/g solide) | Test de captation de CO : masse de CP captée à tp (g CO/g solide | EGG (daN. $mm^{-1}$) |
|---|---|---|---|---|---|
| Solide B3 | 0,22 | 0,06 | 0,19 | 0,23 | 1,2 |

Les résultats montrent que le solide B3 obtenu à partir du procédé selon l'invention permet d'éliminer les composés soufrés $H_2S$, $CH_3SH$, $C_2H_5SH$ contenu dans le gaz, en séquestrant le soufre sur le solide B3 avant perçage (avant $t_p$) à hauteur des capacités données dans le tableau 4, dans les conditions du test.

Le solide B3 est également capable d'épurer un gaz contenant du monoxyde de carbone en captant, dans les conditions de la mesure, 0,23 grammes de CO par gramme de solide avant de commencer à observer l'apparition de monoxyde de carbone en sortie de réacteur (c'est-à-dire avant le perçage $t_p$).

**Revendications**

1.  Procédé de préparation d'un solide comprenant les étapes de :

    a) mélange d'un ensemble comprenant au moins une poudre de $Cu_2(OH)_2CO_3$, une poudre d'un oxyde d'un métal choisi dans le groupe constitué par le cuivre, le zinc, le fer, le manganèse et leur mélange, et au moins un liant ;
    b) mise en contact du mélange de l'étape a) avec une solution aqueuse et malaxage de la pâte obtenue ;
    c) extrusion de la pâte malaxée dans l'étape b) à une pression comprise entre 3 et 25 MPa ;
    d) calcination des extrudés à une température comprise entre 140°C et 500°C et une durée comprise entre 10 min et 6 heures, sous un flux gazeux comprenant de l'oxygène.

2.  Procédé selon la revendication 1 dans lequel les extrudés obtenus à l'issue de l'étape c) sont séchés à une température comprise entre 70 et 160°C pendant une durée comprise entre 1 et 24 heures avant d'être calcinés dans l'étape d).

3.  Procédé selon l'une des revendications précédentes dans lequel la teneur en poudre(s) d'oxyde d'un métal choisi dans le groupe constitué par le cuivre, le zinc, le fer, le manganèse et leur mélange introduite(s) dans l'ensemble mélangé lors de l'étape a), exprimée par le ratio de la masse de poudre(s) d'oxyde(s) métallique(s) introduite(s) dans l'ensemble mélangé lors de l'étape a) sur la masse totale de poudre(s) de malachite et de poudre(s) d'oxyde(s) métallique introduites dans l'ensemble mélangé lors de l'étape a) est compris entre 0,01 et 1.

4.  Procédé selon l'une des revendications précédentes dans lequel ladite poudre de $Cu_2(OH)_2CO_3$ présente une distribution bimodale.

**5.** Procédé selon la revendication précédente dans lequel ladite poudre de $Cu_2(OH)_2CO_3$ comprend de 0,1 à 99,9% poids de particules de malachite dont le $D_{50}$ est compris entre 1 et 15 $\mu$m, et de 99,9 à 0,1% poids de particules de malachite dont le $D_{50}$ est compris entre 25 et 100 $\mu$m, le pourcentage poids étant exprimé relativement au poids total de malachite.

**6.** Procédé selon l'une des revendications précédentes dans lequel ledit oxyde d'un métal compris dans l'ensemble de ladite étape a) est l'oxyde de cuivre, ledit ensemble étant exempt d'oxyde de zinc.

**7.** Procédé selon l'une des revendications 1 à 5 dans lequel ledit oxyde d'un métal compris dans l'ensemble de ladite étape a) est l'oxyde de zinc, ledit ensemble étant exempt de poudre d'oxyde de cuivre.

**8.** Procédé selon l'une des revendications précédentes dans lequel ladite solution aqueuse de ladite étape b) contient un agent peptisant acide ou basique.

**9.** Procédé selon la revendication 8 dans lequel ladite solution aqueuse contient de l'acide nitrique, le ratio masse de $HNO_3$ / masse d'oxydes métalliques étant compris entre 0,5 et 10% poids.

**10.** Procédé selon la revendication 8 dans lequel ledit agent peptisant basique est choisi dans le groupe constitué par la soude, la potasse, l'ammoniaque, l'hydroxyde de tétraéthylammonium (TEAOH), le carbonate d'ammonium et leurs mélanges, le ratio masse d'agent peptisant basique / masse d'oxydes métalliques étant compris entre 1 et 10% poids.

**11.** Procédé selon l'une des revendications 1 à 7 dans lequel la solution aqueuse de ladite étape b) est de l'eau déionisée.

**12.** Procédé selon l'une des revendications précédentes dans lequel l'étape d) de calcination est réalisée à une température comprise entre 200°C et 500°C.

Figure 1

Europäisches Patentamt

European Patent Office

Office européen des brevets

# RAPPORT DE RECHERCHE EUROPEENNE

Numéro de la demande

EP 18 30 5703

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y,D | FR 2 940 967 A1 (INST FRANCAIS DU PETROLE [FR]) 16 juillet 2010 (2010-07-16) * revendications 1,3,4,7 * * page 3, ligne 29 - ligne 33 * ----- | 1-12 | INV. B01J20/30 B01J20/06 B01J20/28 B01D53/04 |
| Y | WO 03/062177 A1 (JOHNSON MATTHEY PLC [GB]; CARNELL PETER JOHN HERBERT [GB]; YOUNG NICOL) 31 juillet 2003 (2003-07-31) * page 3, ligne 11 - page 4, ligne 12 * ----- | 1-12 | |
| A | GB 2 493 046 A (JOHNSON MATTHEY INC) 23 janvier 2013 (2013-01-23) * le document en entier * ----- | 1-12 | |

DOMAINES TECHNIQUES RECHERCHES (IPC)

B01J
B01D

Le présent rapport a été établi pour toutes les revendications

| Lieu de la recherche | Date d'achèvement de la recherche | Examinateur |
|---|---|---|
| La Haye | 4 octobre 2018 | Kaluza, Nicoleta |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 18 30 5703

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-10-2018

| Document brevet cité au rapport de recherche | | Date de publication | Membre(s) de la famille de brevet(s) | | Date de publication |
|---|---|---|---|---|---|
| FR 2940967 | A1 | 16-07-2010 | AU | 2009336618 A1 | 04-08-2011 |
| | | | BR | PI0924028 A2 | 05-06-2018 |
| | | | CA | 2748297 A1 | 15-07-2010 |
| | | | CN | 102271786 A | 07-12-2011 |
| | | | CN | 104803675 A | 29-07-2015 |
| | | | EP | 2385872 A1 | 16-11-2011 |
| | | | ES | 2540252 T3 | 09-07-2015 |
| | | | FR | 2940967 A1 | 16-07-2010 |
| | | | MY | 162206 A | 31-05-2017 |
| | | | RU | 2011133821 A | 20-02-2013 |
| | | | US | 2012000855 A1 | 05-01-2012 |
| | | | WO | 2010079264 A1 | 15-07-2010 |
| | | | ZA | 201104601 B | 29-02-2012 |
| WO 03062177 | A1 | 31-07-2003 | AUCUN | | |
| GB 2493046 | A | 23-01-2013 | BR | 112014001139 A2 | 21-02-2017 |
| | | | CN | 103687667 A | 26-03-2014 |
| | | | DE | 112012003072 T5 | 17-04-2014 |
| | | | GB | 2493046 A | 23-01-2013 |
| | | | JP | 6043350 B2 | 14-12-2016 |
| | | | JP | 2014521497 A | 28-08-2014 |
| | | | RU | 2014106733 A | 27-08-2015 |
| | | | US | 2014161701 A1 | 12-06-2014 |
| | | | US | 2017072381 A1 | 16-03-2017 |
| | | | WO | 2013014415 A1 | 31-01-2013 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7837964 B
- US 4582819 A
- US 2013047850 A
- US 6007706 A
- EP 243052 A
- FR 2940967
- WO 9524962 A

**Littérature non-brevet citée dans la description**

- **G. B. J. DE BOER ; C. DE WEERD ; D. THOENES ; H. W. J. GOOSSENS.** *Part. Charact.,* 1987, vol. 4, 14-19
- BRUNAUER-EMMETT-TELLER. *The Journal of American Society,* 1938, vol. 60, 309